# EUROPÄISCHE PATENTANMELDUNG

(11) **EP 1 078 586 A1**
(43) Veröffentlichungstag der Anmeldung: **28.02.2001**
(21) Anmeldenummer: 99116513.5
(22) Anmeldetag: 24.08.1999
(51) Int. Cl.: A47C 31/12, A47C 7/46, B60N 2/64, B64D 11/06

(54) **Vorrichtung zur dreidimensionalen konturveränderung der Struktur eines flächenartigen Formkörpers**

(71) Anmelder: Erker, Christian, 61250 Usingen (DE)
(72) Erfinder: Erker, Christian, 61250 Usingen (DE)
(74) Vertreter: Termin, Erich

(57) **Zusammenfassung**

Vorrichtung zur dreidimensionalen Konturveränderung der Struktur eines flächenartigen Formkörpers, in den Achsrichtungen a, b und c mittels eines im Formkörper befindlichen manipulierbaren Korsetts K, das vorprogrammierbar richtungs-flexibel so veränderbar ist, dass die veränderbare Fläche eine gewünschte Kontur erhält.

## Beschreibung

Die Erfindung betrifft eine Vorrichtung zur dreidimensionalen Konturveränderung der Struktur eines flächenartigen Formkörpers in den Achsrichtungen a, b und c, mittels eines sich im Formkörper befindenden manipulierbaren Korsetts K, das vorprogrammierbar,richtungsflexibel so veränderbar ist, dass die veränderbare Fläche eine gewünschte Kontur erhält.

Aus der DE OS 19714576 ist zwar eine zweidimensionale Flächenmanipulation in der Richtung einer Achse am Beispiel eines Möbelstücks bekannt. In vielen Anwendungsbereichen ist jedoch eine Veränderung der Struktur eines flächenartigen Formkörpers dreidimensional sehr erwünscht. Zwar ist es seit langem bekannt, Hohlkörper mittels gasförmigen oder flüssigen Medien entsprechend zu verformen, jedoch folgen die Verformungen mittels dieser Medien dem Willkürlichkeitsprinzip. Bekannterweise erfolgen Verformungen von flächenartigen Formkörpern, wie zum Beispiel Bettmatratzen, auch durch die Verwendung von verformbaren Materialien, wie Latex oder Polyurethanschaum. Die geschilderten Methoden oder das Verwenden spezieller Materialien erfüllen zwar den jeweiligen anwendungsbezogenen Zweck. Nachteilig ist es, dass die Verformungen entweder nicht reversibel sind, oder aber reversibel jedoch nicht genug punktbezogen und nicht genug stützbezogen anwendbar.

Der Erfindung liegt deshalb das Problem zugrunde, die Flächen eines verformbaren, flächenartigen Formkörpers, dreidimensional konturenartig derart zu verändern, dass die Konturen vorprogrammierbar, dauerhaft und veränderbar, sowie stabil sind und dass die Vorrichtung darüberhinaus eine Stützfunktion erfüllt. Im Zuge der andauernden ökonomischen und ökologischen Fortentwicklung, wird eine relativ einfach zu handhabende Vorrichtung und auch gleichzeitig eine materialsparende und materialrecycelbare Vorrichtung gefordert,die zu günstigen Kosten produziert werden kann.

Dieses Problem und zugleich alle gestellten Anforderungen der Aufgabe der Erfindung wurde gelöst durch eine diesen Anforderungen entsprechende Vorrichtung gemäß Anspruch 1.

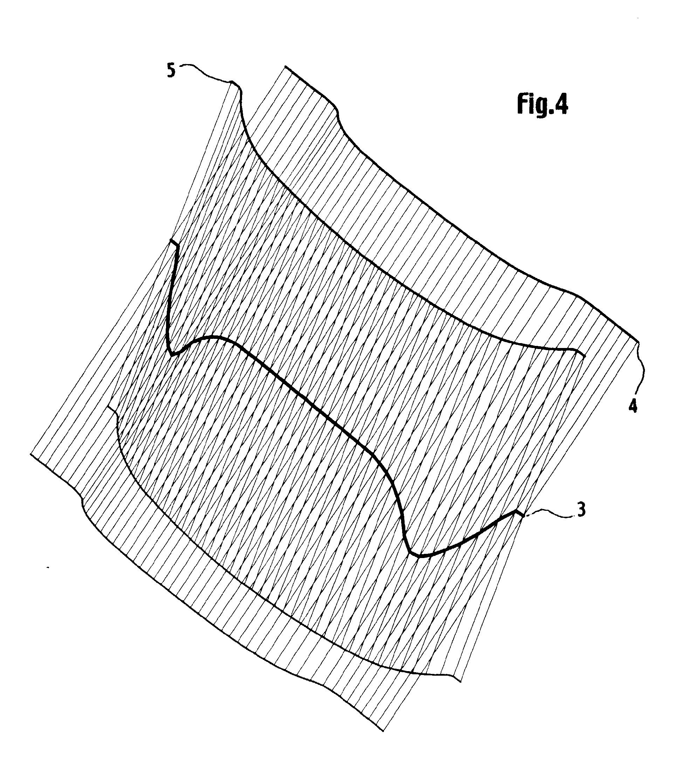

Wichtig für die programmierbaren jeweiligen Querschnittsformgebungen der flächenartigen Formkörper sind räumlich verlaufende Kanten. Im Falle wie in Fig. 4 dargestellt, ist es die Kante 3, die die Schnittmenge darstellt, resultierend, aus den definierten immaginären Profilrinnen 4 und 5, der angestrebten einbringbaren Flächenquerschnitte.
Die multiple Kippdrehbewegung der Elemente 1, erfolgt, durch punktuelle Verknüpfungen der einzelnen Elemente 1, mittels den Verbindungselementen 6, durch das Verschieben der Verbindungselemente 6 relativ gegeneinander und das Drehen der Elemente 2 im Bereich von Null bis Neunzig Grad.
Der mechanische Vollzug der Kippdrehbewegungen der Elemente 1 und 2, erfolgt vorzugsweise mittels Motorkraft. Die Motorenfunktionen zum Erzielen der gewünschten punktuellen Verformungen der Profile, der flächenförmigen Formkörper erfolgt zweckmässig mittels manuell betätigbarer Schaltsysteme, ebenfalls aber auch, mittels verschiedenartiger sensorischer Schaltsysteme.
Die Herstellung der Dreidimensionalität durch die Kombination eines in zweidimensionaler Richtung agierenden Funktionssystems, mit einem die dritte Dimension ausmachenden Funktionssystem, ist an sich nicht bewegend, wenn lineare Konstruktionskomponenten zur Anwendung kommen. Solche Systeme würden jedoch auch nur linear die Kontur eines flächenartigen Formkörpers verändern können. Erst die integral vorprogrammierbare Formgestaltung der Elemente 1, führt in der Kombination mit der ebenfalls vorprogrammierbaren Formgestaltung der Elemente 2, bei ineinandergreifender Dreh- oder Kippbewegung oder einer Kombination der Bewegungen der beiden Elemente 1 und 2, zur punktuellen Konturgestaltung eines flächenartigen Formkörpers.
Die Flächengrösse des Formkörpers ist nur durch die Matarialbelastbarkeit der Elemente 1 und 2 limitiert. Insbesondere der Elemente 1. Die Elemente 2 dagegen können weitestgehend multipel eingesetzt werden und decken bei deren Bewegungsradius von 180 ein breites Flächenspektrum ab.

Die Erfindung mit dessen Korsettstruktur, löst neben der flächenverändernden Konturgestaltung, desweiteren auch das Problem des gleichzeitigen Stützens, insbesondere bei vertikalen Anwendungsgegenständen, da die Elemente 1 und 2 aus belastbarem Material, vorzugsweise aus Federstahl bestehen. Da in Abhängigkeit vom Verkleidungskomfort des Korsetts mehr oder weniger elastisches Material beliebig einsetzbar ist, sind dem Anwendungsspektrum der neuen Vorrichtung diesbezüglich weite Grenzen gesetzt.

Das Anwendungsspektrum der neuen Vorrichtung reicht vom Kraftfahrzeugsitz, über medizinische Matratzen, bis hin zu medizinischen Stützprothesen um nur einige aufzuzählen. Welche Anwendungsvorteile mittels der neuen Vorrichtung zu erzielen sind, sei am Beispiel eines Passagierflugzeugsitzes dargestellt. Bekanntlich sind Langstreckenflüge sehr ermüdend. Trotzdem finden viele Passagiere keinen Schlaf, weil ein Standardflugzeugsitz nicht der individuellen Ruhensposition der Passagiere entspricht. Mancher ist in seiner Vorzugspositionierung extrem rechtsseitig ausgerichtet, ein anderer benötigt eine Stütze im unteren Rückenbereich, einen weiteren stört der Druck des Sitzes im vorderen Bereich des Oberschenkels. Allen diesen Sitzkomfortunzulänglichkeiten, kann mit der neuen Vorrichtung abgeholfen werden, da die konturengestaltende Anpassung des Flugzeugsitzes individuell dertart möglich ist, dass jedem Sitzeinstellungsbedarf Rechnung getragen wird. Mehr noch, wenn die individuell gewählte Vorzugspositionierung, nach einiger Zeit, auch zu Ermüdungserscheinungen führt, kann eine weitere neue Sitzposition eingestellt werden, die wiederum eine Entspannungswirkung hat. Ähnliche Bedeutung kann der Profiländerung einer Bettmatratze zugemessen werden, insbesondere vom medizinischen Standpunkt aus. Das sogenannte Wundliegen bei Langzeitbettlägrigen ist ein echtes Problem, weil kaum eine Möglichkeit besteht dem Patienten in der Liegeposition Abwechslung zu schaffen. Auch in diesem Falle greift die Möglichkeit der Liegepositionsveränderung mittels der erfinderischen Vorrichtung. Hinzu kommt in diesem Falle, dass der Patient in Eigenregie Abhilfe schaffen kann.lnsbesondere bei der Komfortausführung über ein sensorbezogenes Schaltsteuerungssystem. Erwähnt sei in diesem Zusammenhang die Entlastung des Pflegepersonals, das dann weniger oft zur Hilfestellung gebeten wird und sich anderen Aufgaben widmen kann was als ökonomischer Vorteil einzustufen ist. Ein breites Anwendungsfeld der neuen Vorrichtung kann im Bereich der verschiedenartigen Technik erschlossen werden. Genannt seien hier die Aviatik und die Nautik. Im Bereich der Aviatik, besteht durch die Möglichkeit der variablen Veränderung der Kontur der Oberfläche eines Gerätes, beispielsweise der Tragflächen eines Segelflugzeugs, stets die Möglichkeit der Schaffung optimaler Auftriebsbedingungen, beziehungsweise in der Umkehr der Verhältnisse, der optimalen Landebedingungen. In der Nautik besteht die Möglichkeit der optimalen, variablen Buggestaltung eines Wasserfahrzeugs, im Sinne eines minimalen Widerstands des Wassers beim Gleiten des Fahrzeugs. Folge einer solchen Gleitoptimierung ist natürlich ein geminderter Energieaufwand und damit verbunden, ein verminderter Treibstoffbedarf. Der resultierende diesbezügliche Effekt ist nicht unbedeutend bei der Einbeziehung der ökologischen Betrachtungweise als Vorteile der Erfindung.
Um noch einige bedeutende Anwendungsbereiche aufzuzählen, erfolgt die breite Anwendung der neuen Vorrichtung im Bereich der ergonomischen Formgebung von Gebrauchsgegenständen mit Stützfunktion, im Bereich der Schlafmöbel,der Sitzmöbel und sonstigem Möbelbereich, im Sitzbereich von Transportmitteln, in Sportgeräten und im Bereich der Geräte der medizinischen Hilfsmittel oder therapeutischen Geräte.

Die Erfindung lässt in Abhängigkeit vom Anwendungszweck zahlreiche Ausführungsformen der Vorrichtung, inbezug auf die Formgestaltung der Basiselemente 1 und 2, zu. Die Verdeutlichung des Grundprinzips der Vorrichtung wird anhand der nachfolgenden Figuren dargestellt und beschrieben. Es zeigen;
- Fig.1: das Korsetteil A, bestehend aus einer Aneinanderreihung der Formelemente 1, die verknüpft sind mittels der Elemente 6, sowie das Korsetteil B, bestehend aus denFormelementen 2,
- Fig. 2a: 1 zur ausführlichen Anschauung, das Korsetteil A aus der Perspektive der Vertikaldraufsicht von oben,
- Fig.2b: das Korsett K aus der Vorderansichtperspektive in funktionseffektiver Darstellung in der Kombination von Korsetteilen A und B, mit im " Nullzustand" sich befindenden Formelementen 2,
- Fig.2c: das Korsett K von oben perspektivistisch gesehen, mit nur dem äusseren eingebrachten Lordosenstützpaar 15,
- Fig. 4: eine Darstellung einer räumlich verlaufenden Kante 3, als Schnittmenge gebildet aus den immaginären definierten Profilrinnen 4 und 5, der in das Korsetteil A einbringbaren Profilflächenquerschnitte,
- Fig. 5: eine Abwandlung der räumlich verlaufenden Kante 3, die nach der Kippbewegung eines Elements 2 entsteht und nun Rinne 13 genannt wird,

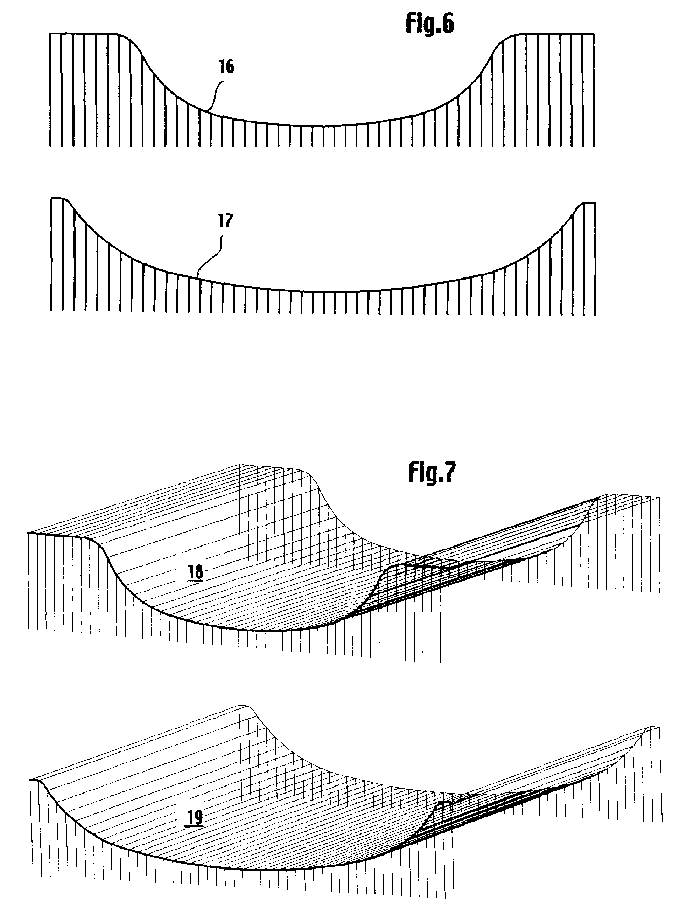

- Fig. 6: in der Reihenfolge das Definieren der Seitenprofile eines bestimmten Formkörpers in der Position 16, mit der Darstellung eines engeren inneren Profils und mit der Position 17, mit breiterem Profil,

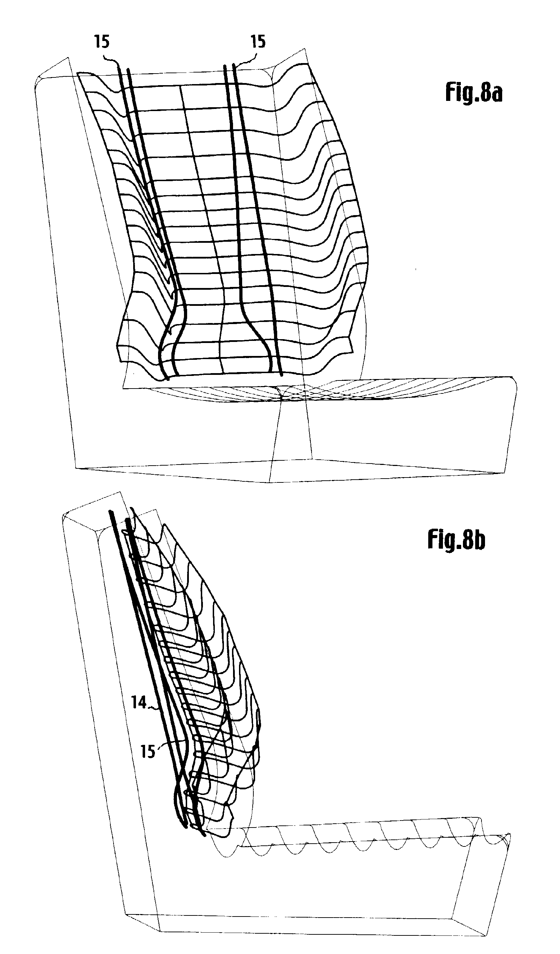

- Fig. 7: in der Reihenfolge in Weiterentwicklung von Fig.6,die Darstellung der FLächenentwicklung der Profile gemäss 18 und 19, deren kombinierte Schnittmengen zu entsprechenden Kanten bzw. Rinnen, wie in den Figuren 4 und 5 führen,
- Fig. 8a: eine perspektivistische Ansicht eines Kraftfahrzeugsitzes mit eingebrachter Lordosenstütze in der Rückenlehne,
- Fig.8b: eine Rückenlehne wie in 8a als Seitenansicht, mit eingebrachter Lordosenstütze in der Rückenlehne,
- Fig.9a: eine seitlich perspektivistische Ansicht eines Kraftfahrzeugsitzes mit nicht eingebrachter Lordosenstütze in der Rückenlehne,
- Fig.9b: eine seitlich perspektivistische Ansicht eines Kraftfahrzeugsitzes, deren nur äusseres Lordosenstützenpaar 15 in der Rückenlehne eingebracht ist,

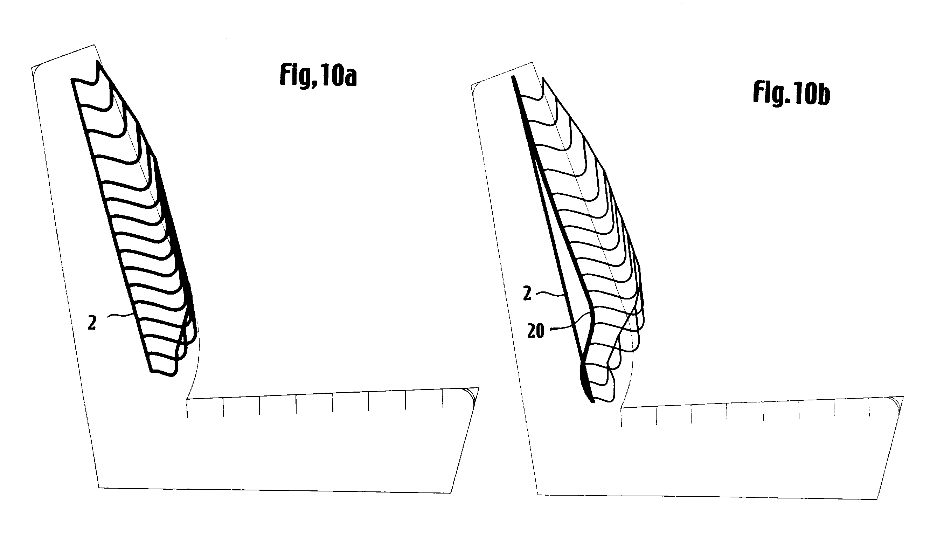

- Fig.10a: eine Seitenansicht eines Kraftfahrzeugsitzes mit nicht eingebrachter Lordosenstütze in der Rückenlehne,
- Fig.10b: eine Seitenansicht eines Kraftfahrzeugsitzes mit eingebrachter Lordosentütze in der Rückenlehne,

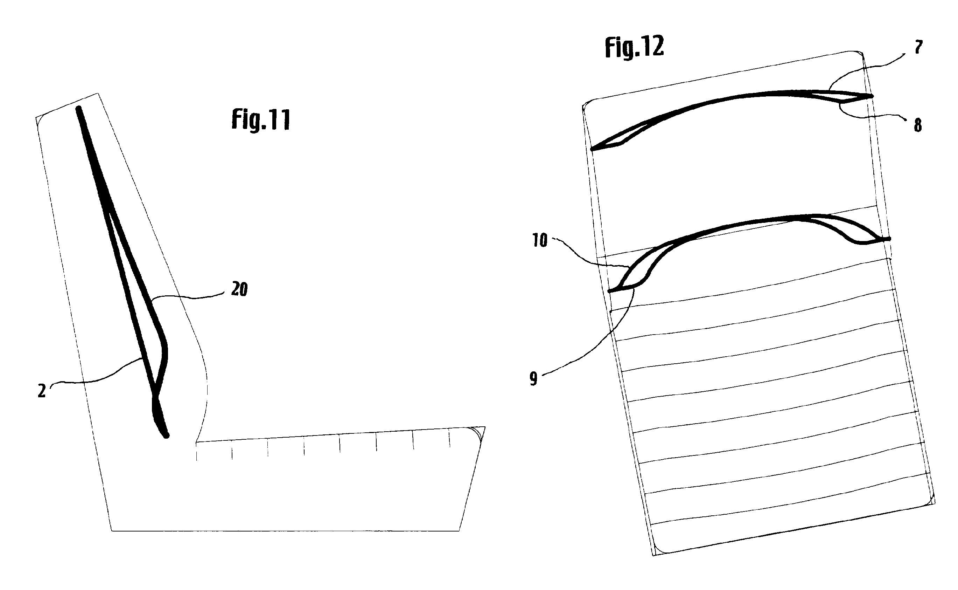

- Fig.11: eine seitliche Ansicht eines Schnitts eines Kraftfahrzeugsitzes mit der Darstellung eines Korsetteils B mit zwei Elementen, das eine 2 in der Nullgradwinkellage, beziehungsweise der sogenannten " Nullposition", das andere 20 in der 90 Gradlage,
- Fig.12: eine Darstellung von jeweils einem Formelement 1, situiert in einer Rückenlehne, wobei jedes Element den Flächenquerschnitt des Bereichs bestimmt, den es stützt. Im vorliegenden Fall werden die beiden extremen Querschnittsprofile 7, der grössten und 8 der geringsten Weite im oberen Rückenlehnenbereich des einunddesselben Elements gezeigt. Parallel dazu, finden die Querschnittsprofile 9 mit der geringsten und 10 mit der grössten Weite, ihre Entsprechung im unteren Rückenlehnenbereich.

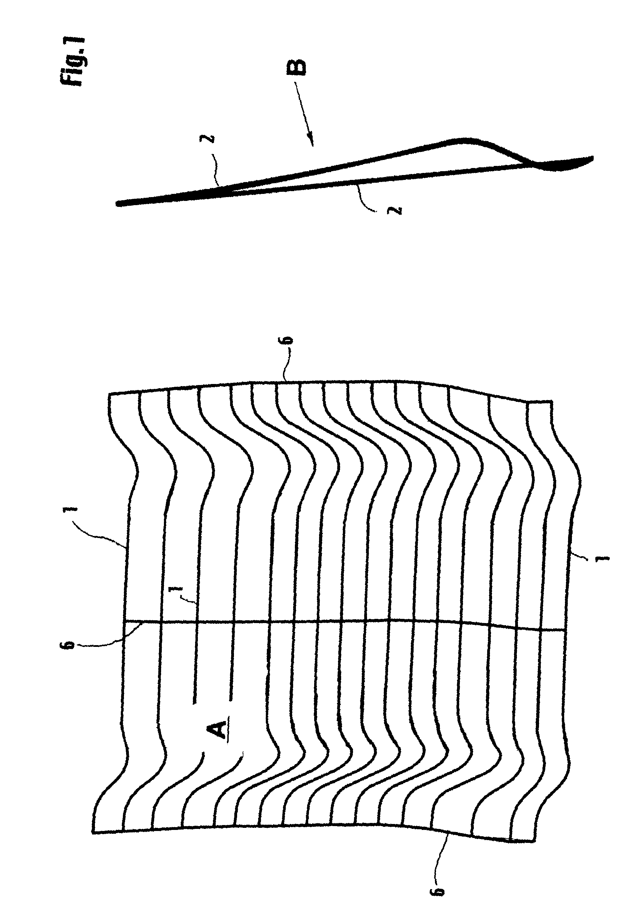

In Figur 1 wird schematisch die Aneinanderreihung der Elemente 1 dargestellt, die in der Summe das Korsetteil A bilden. Die Darstellung zeigt beispielhaft die Gestaltungsverschiedenheit der Elemente 1. Damit wird schon die Vorprommamierung für ein bestimmtes Konturenprofil der angestrebten Form ausgedrückt. in Abhängigkeit von der Gestaltung der Kante 3, wird durch eine Drehkippbewegung, der gegebenenfalls verknüpften Elemente 1, das veränderbare, gewünschte Konturensprektrum, der Gestaltung des jeweiligen flächenartigen Formkörpers, abgedeckt. Eine andere Kombination der Elemente 1, mit einer andersartigen Kantengestaltung der Kante 3, ermöglicht ein anderes Konturenspektrum.Des weiteren wird ein Korsetteil B mit zwei Einzelelementen 2 in Figur 1 gezeigt.

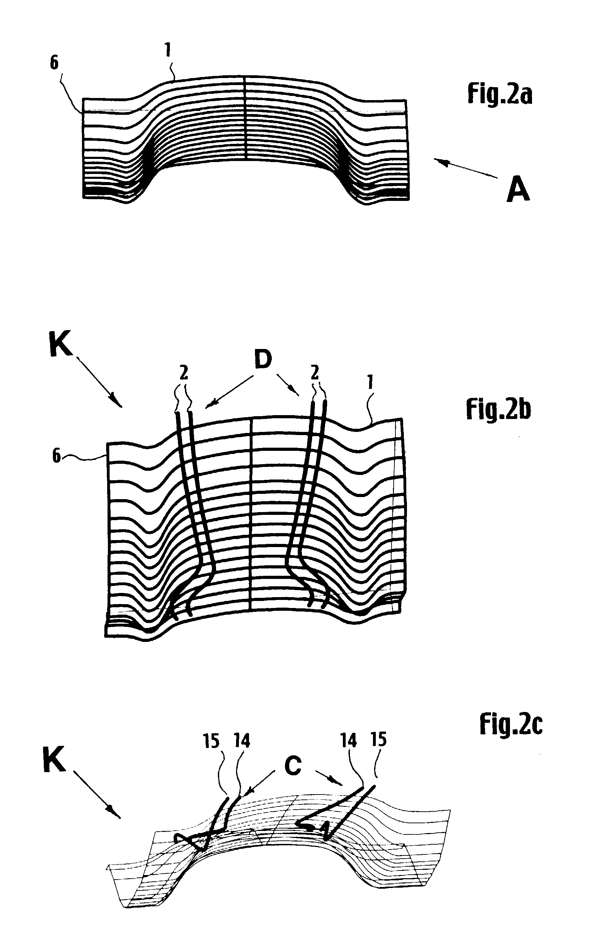

Figur 2c, zeigt, in der Einstellung C, die Funktionsweise der beiden gegenüberliegenden Lordosenstützenpaare 14 und15. Die Stützen 14 und 15 sind jeweils synchron drehbar zusammengeschlossen und die Stützen 15 sind gegenüber den Stützen 14 synchron um 90 Grad in Richtung der c-Achse gedreht und stehen in rechtwinkliger Stellung zu den Stützen 14. Diese Stellung, kann, in Abhängigkeit von der Profilgebung der Formelemente 14und 15, in dieser speziellen Stellung, von den Formelementen 15, verschiedenartig profiliert sein, wenn verschiedene Konturen des flächenartigen Formkörpers erzielt werden sollen. Eine weitere Variante der Figuren 2, ist die Ansicht D der Figur 2b, von zwei spiegelbildlich versetzten Doppelelementen 2 in der perspektivistischen Draufsicht. Zum besseren Vorstellungsvermögen sind die Elemente 2 in Kombination mit einer Reihe der Elemente 1 und 6 dargestellt. Die Andersartigkeit des Elementeprofils gegenüber der Ansicht C kommt hier deutlich zum Ausdruck.

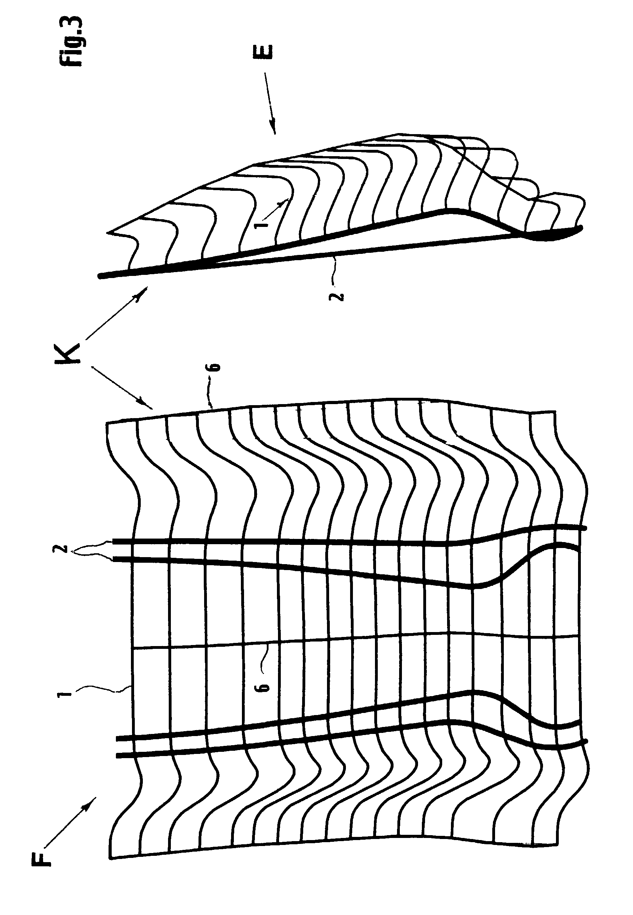

In Figur 3 werden die kombinierten Ansichten aus den Figuren 1 und 2 dargestellt, mit der Seitenansicht E, sowie in der perspektivistischen Vorderdraufsicht F.

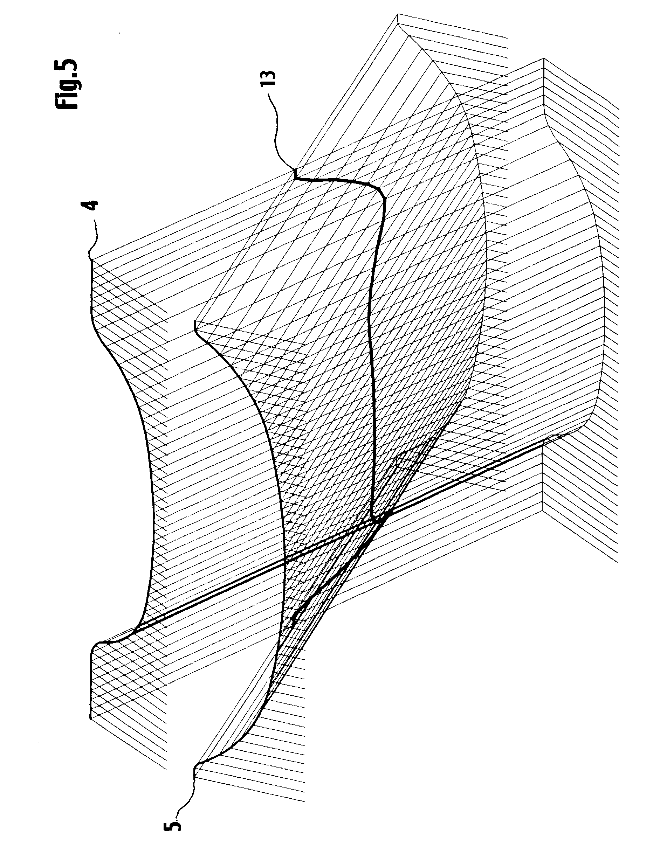

In Figur 4 wird dargestellt wie die Kantenfindung der Kante 3 eines Elements 1 zustande kommt. Ansicht G der Figur 5 stellt dar, wie sich die aus den Kanten hervorgehenden sogenannten Rinnen 13 im gewünschten späteren, durch die Funktionsbewegung der Elemente 2 verursachten, Kippwinkel schneiden.

Folgend wird, zum besseren Verständnis der Erfindung, die Funktionsweise der neuen Vorrichtung am Beispiel eines Sitzes, anhand von weiteren Figuren beschrieben. Speziell handelt es sich um die Rückenlehne eines Fahrzeugsitzes.
Die mechanische, dreidimensionale Verstellbarkeit der Lehnschale der Fahrzeugrückenlehne, erlaubt es, die Lehnschale, für unterschiedlich grosse und unterschiedlich breite Oberkörper der Fahrzeugnutzer so zu gestalten, dass die Sitzlehne eine dem Rücken den Nutzers optimal angepasst werden kann. Mittels einer Verstellmechanik, können unabhängig voneinander drei Grundfunktionen ausgeführt werden;
1. Herstellen der Rückenbreite
2. Herstellen der Rückenlänge
3. Einstellen der Lordosenstützen 14,15 im Verhältnis zu den Elementen 1 - in der Kontur entlang der Wirbelsäule - .

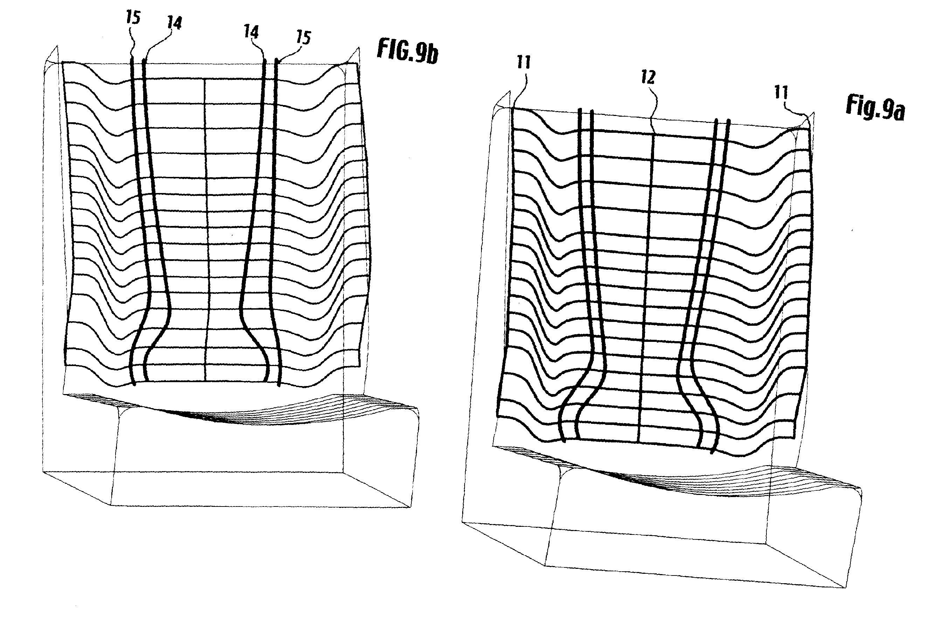

Das Herstellen der Rückenbreite geschieht mittels dem Korsetteil A , speziell der Konturenkurven 3, der miteinander mittels den Elementen 6 verknüpften elemente 1 , die so ein quasiflächenartiges Gitter bilden, wie in Figur 1 dargestellt.
Jedes Formelement 7, 8, 9 und 10, wie in Figur 12 gezeigt, bestimmt den Flächenquerschnitt des jeweiligen Bereichs, den es stützt. Die Formelemente sind hier beispielsweise an deren Enden und in deren Mitte durch die Elemente 6, in diesem Falle durch sogenannte Bänder 11 und 12, wie in Figur 9a gezeigt , miteinander verknüpft, wodurch die Formelemente in Abstandsposition gehalten werden und wodurch, durch ein motorangetriebenes Verschieben der äusseren Bänder 11, gegen das mittlere Band 12 , eine Kippung der Formelemente ermöglicht wird . Der Weg X der Verschiebung von 11 gegen 12 wird hier beispielsweise auf 50 mm festgeschrieben.
Um den Kantenverlauf des jeweiligen Formelements zu ermitteln, müssen für den entsprechenden Bereich die zwei extremen Formelement- Querschnittsprofile 7,8 und 9,10 ermittelt werden, die eingestellt werden sollen auf die maximale Rückenbreite für kräftige, beziehungsweise schmächtige Rückenbreiten. Hierbei ergibt sich eine räumliche Tiefe der Knüpfpunkte mit den Bändern 11, zur Verknüpfung mit dem Band 12. Aus der jeweiligen Tiefe und dem Weg der X der Verschiebung der Bänder 11 und 12 gegeneinander, resultiert für jedes Formteilelement individuell ein Kippwinkel β. Im 3D Computerzeichenprogramm, CAD in 3D, werden nun die sogenannte Rinnen 13, aus den Profilen der Formelemente 16, 17 im Winkel β so geschnitten, dass man eine räumlich verlaufende Linie erhält, die in diesem Beispiel als ein Federstahldraht nachgebogen wird. Dieser räumlich gebogene Draht, weist, aus dem Blickwinkel entlang der jeweiligen Rinne, deren eigenspezifisches Profil auf. Durch die Aneinanderreihung solcher profilierter Ferstahldrähte, der Elemente 1, entsteht schlieslich das Kosetteil A , mit veränderbarem Gesamtprofil, in Abhängigkeit des Kippwinkels, der zustande kommt, durch die Verschiebung der Bänder 11 gegen das Band 12, im Wegebereich X.

Das Korsetteil A wird parallel zu den den flexibel gestaltbaren Bändern 11 und 12 durch das Korstteil B gestützt. Hauptbestandteile von Korsetteil B, sind die Formteilpaare 14 und 15, wie in Figur 9b.Diese werden, in einem hier nicht dargestellten Rahmen, fixiert und durch einen hierzu speziell geeigneten Mechanismus, wahlweise und paarweise, Paar 14 oder Paar 15, in eine Kippbewegung, um eine imaginäre Achse entlang der Haupterstreckungsrichtung der Paare 14 und 15 versetzt, so, dass die in die Formelemente, in diesem Beispiel ebenfalls bestehend aus Federstahldraht,gebogene Kontur, in Abhängigkeit vom Kippwinkel, auf das Korsetteil A übertragen wird, da das Korsetteil B in direktem, gleitbaren Kontakt zu Korsetteil A steht.

Der Kippwinkel der Elemente 14 zu 15 bestimmt dementsprechend die Weite der Ausbuchtungen - der sogenannten Lordosenstütze - . Bei nur zwei Formteilpaaren kann die Wahl der Konturen der Formteilpaare und die Veränderung von deren Kippwinkel mittels einem Motorantrieb erfolgen, indem man mit einem speziell geeigneten Mechanismus von einer " Maximum-kontur" über ein Minimum zu einer weiteren " Maximum-kontur " operiert.

### Positions-Zahlen-Liste List of reference numbers

### Pos. Benennung / Designation

- 1: Profiliertes Formelement von Korsetteil A
- 2: Profiliertes Formelement von Korsetteil B
- 3: Räumlich verlaufende Kante - Konturenkurve
- 4: Immaginäre Profilrinne
- 5: Immaginäre Profilrinne
- 6: Verbindungselemente
- 7: Querschnittflächen bestimmende Formelemente
- 8: Querschnittflächen bestimmende Formelemente
- 9: Querschnittflächen bestimmende Formelemente
- 10: Querschnittflächen bestimmende Formelemente
- 11: Gegeneinander verschlebbare äussere Verknüpfungsbänder der Elemente 1,
- 12: gegenüber dem mittleren Verknüpfungsband der Elemente 1
- 13: Profilgebungsrinnen
- 14: Formleitpaare von Korsetteil B (Lordosenstütze)
- 15: Formleltpaare von Korsetteil B (Lordosenstütze)
- 16: Inneres enges Profil zur Definition des Seitenprofils eines Formkörpers
- 17: Äusseres breites Profil wie gemäss 16
- 18: Inneres Flächenprofil In Fortentwicklung des Seitenprofils 16
- 19: Äusseres Flächenprofil In Fortentwicklung des Seitenprofils 17
- 20: Darstellung eines Korsetttells B in der 90 Gradlage

- K: Profilgebungskorsett
- A: Korsetteil bestehend aus den Formelementen 1
- B: Korsetteil bestehend aus den Formelementen 2
- C: Darstellung mit nur einem Formelementleitpaar (Lordosenstützenpaar) 15 in der 90 Gradkippung und dem Formenleitpaar 14 in der Nullgradlage
- D: Spiegelbildliche Darstellung der Elemente 2 Im Korsett K
- E: Seitenansicht der Kombination von Fig.1 und 2 Im Korsett K
- F: Perspektivistische Darstellung in Vorderdraufsicht der kombinierten Fig.1 und 2 im Korsett K
- X: Verschiebedistanz der Elemente 11 und 12 gegeneinder

- β: Kippwinkel resultierend aus der jeweiligen räumlichen Tiefe der Formelement-Querschnittsprofile der Knüpfpunkte derselben mit den Bändern 11 zur Verknüpfung mit dem Band 12 und dem Weg X der Verschiebung der Bänder 11 und 12 gegeneinander, für jedes Formteilelement individuell verschieden.

## Patentansprüche

1. Vorrichtung zur dreidimensionalen Konturveränderung der Struktur eines flächenartigen Formkörpers, in den Achsrichtungen a, b und c mittels eines im Formkörper befindlichen manipulierbaren Korsetts (K), das vorprogrammierbar richtungs-flexibel so veränderbar ist, dass die veränderbare Fläche eine gewünschte Kontur erhält, dadurch gekennzeichnet, dass das Korsett (K) aus mindestens zwei unabhängigen, aber miteinander kombinierbaren Korsetteilen (A) und (B) besteht, wobei;
das Korsetteil (A) besteht, aus einer Aneinanderreihung von mehreren aber mindestens zwei profilierten Formelementen (1), die eine räumlich verlaufende Kante (3) besitzen, die ausgehend von verschiedenen Betrachtungswinkeln das Mengenprodukt von mindestens zwei unterschiedlichen, vordefinierte Konturen beinhaltet und eine singuläre oder multiple Veränderung der Lage der einzelnen oder zusammengefassten Formelemente (1), mittels einer Kipp- oder Drehbewegung, beziehungsweise Kippdrehbewegung, unterschiedliche Flächenquerschnitte in allen drei Achsrichtungen erhalten werden, abhängig von der vordefinierten Formgebung der Elemente und;
das Korsetteil (B) besteht, aus mindestens einem wahlweise zweckverschiedenartig profilierten Formelement (2), das ebenfalls eine räumlich verlaufende Kante , mit unterschiedlicher, vorgegebener, ansichtswinkel-bezogener Kontur aufweist und das durch eine Drehkippbewegung unterschiedliche Flächenquerschnitte erzeugt und;
durch die Kombination der Positionierungen der beiden Korsetteile (A) und (BB, bedingt durch das Kommunizieren der beiden Korsetteile, der gewünschte Formgebungsseffekt erhalten wird.

2. Vorrichtung nach Anspruch 1, dadurch gekennzeichnet, dass die räumlich verlaufende Kante (3) die Schnittmenge darstellt, resultierend, aus den deffinierten immaginären Profilrinnen (4) und (5%, der angestrebten einbringbaren Profilflächenquerschnitte.

3. Vorrichtung nach Anspruch 1, dadurch gekennzeichnet, dass die multiple Kippdrehbewegung der Elemente (1) erfolgt, durch punktuelle Verknüpfungen der einzelnen Elemente (1) mittels einem Verbindungselement (6) und durch das Verschieben der Verbindungselemente (6) relativ gegeneinander und das Drehen der Elemente (2) im Bereich von Null bis 90 Grad.

4. Vorrichtung nach Ansprüchen 1 und 3, dadurch gekennzeichnet.
dass die Drehkippbewegungen der Elemente (1) und (2) mittels Motoren bewerkstelligt werden die manuell oder sensorisch schaltbar sind.

5. Anwendung der Vorrichtung nach Ansprüchen 1 bis 4, zur ergonomischen Formgebung von Gebrauchsgegenständen mit Stützfunktion sowie Vorrichtungen zur effektiven Nutzung der dynamischen dreidimensionalen Formgestaltungsmöglichkeiten.

6. Anwendung der Vorrichtung nach Anspruch 5, im Bereich der dynamischen Gestaltung,der Sitze von Transportmitteln, der Sitze und Liegeflächen von Möbeln, von Sportgeräten, von medizintechnischen und rehabilitationstechnischen Einrichtungen und Geräten,von die Aerodynamik beeinflussenden Flächen in der Aviatik,von den Vortrieb gestaltenden beziehungsweise den Vortribwiderstand mindernden Flächen in der Nautik, von Bedachungen im Fahrzeugbau, im Gebäudebau mit weitestgehender Auslegung umfassend auch Markisen

7. Anwendung der Vorrichtung nach Ansprüchen 1 bis 4 und 6, zur Herstellung von Kraftfahrzeug sitzen und zur Herstellung von Polstermöbeln.
